# EUROPÄISCHE PATENTSCHRIFT

(11) **EP 1 885 159 B1**
(45) Veröffentlichungstag und Bekanntmachung des Hinweises auf die Patenterteilung: **25.06.2014**
(21) Anmeldenummer: 06291268.8
(22) Anmeldetag: 02.08.2006
(51) Int. Cl.: H05B 3/50, H05B 3/14, H01C 7/02, B60H 1/22

(54) **Elektrische Heizungsanordnung, insbesondere für ein Kraftfahrzeug**
Electric heating assembly, in particular for a motor vehicle
Ensemble de chauffage électrique, notamment pour véhicule automobile

(43) Veröffentlichungstag der Anmeldung: 06.02.2008
(73) Patentinhaber: Behr France Rouffach SAS, 68250 Rouffach (FR)
(72) Erfinder: Brun, Michel, 68740 Rustenhart (FR); Denny, Geoffrey, 68170 Rixheim (FR); Eckerlen, Gerard, 68250 Rouffach (FR); Gogmos, Erwan, 68000 Colmar (FR); Miss, Pascal, 67600 Sélestat (FR); Mougey, Mathieu, 68190 Ensisheim (FR); Robin, Nicolas, 67000 Strasbourg (FR); Schmittheisler, Christophe, 67680 Epfig (FR); Weingaertner, Stéphane, 68250 Pfaffenheim (FR)
(74) Vertreter: Grauel, Andreas

(56) Entgegenhaltungen:
- EP-A- 1 528 837
- EP-A- 1 621 378
- EP-A2- 1 340 638
- FR-A1- 2 859 866

## Beschreibung

Die Erfindung betrifft eine elektrische Heizungsanordnung mit PTC-Elementen, insbesondere für ein Kraftfahrzeug.

In Hinblick auf die Ausgestaltung der PTC-Heizungsanordnungen gibt es im Wesentlichen zwei unterschiedliche Ausführungsformen. Gemäß der ersten Ausführungsform ist ein Wabenkörper, der ganz aus einem PTC-Material besteht, vorgesehen, welcher von der zu erwärmenden Luft durchströmt wird. Die elektrische Kontaktierung erfolgt auf zwei einander gegenüberliegenden Seiten des Wabenkörpers. Ein Beispiel einer derartigen Ausführungsform ist in der DE 100 60 301 A1 offenbart, wobei die Waben als durchgehende Kanäle mit einem quadratischen Querschnitt ausgebildet sind.

Die andere, zweite Ausführungsform umfasst in der Regel streifen- oder quaderförmige PTC-Elemente, die zwischen Kontaktblechen und/oder Wellrippen angeordnet sind, über welche die elektrische Kontaktierung erfolgt. Die zu erwärmende Luft nimmt hierbei die von den PTC-Elementen abgegebene Wärme im Wesentlichen von den der Vergrößerung der Wärmeübertragungsfläche vorgesehenen Wellrippen auf. Ein Beispiel einer derartigen Ausführungsform ist in der EP 1 522 439 A1 offenbart. Hierbei sind die zwischen Kontaktblechen angeordneten PTC-Elemente sowie auf der Außenseite der Kontaktbleche angeordnete Wellrippen in einem elektrisch isolierenden Kunststoff-Rahmen gehalten.

Aus der DE 101 44 757 A1 ist ferner eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Gemäß einem Ausführungsbeispiel ist hierbei ein PTC-Element in Gestalt mehrerer in ihrem Aufbau nicht näher beschriebener Heizwaben in einem Kunststoff-Rahmen angeordnet, der die Luftaustrittsöffnung einfasst.

Die FR 2859866 A1 offenbart einen Heizer mit einem Netz aus wabenförmigen Sechsecken.

Es ist Aufgabe der Erfindung, eine verbesserte elektrische Heizungsanordnung mit elektrischen Heizelementen, insbesondere PTC-Elementen, zur Verfügung zu stellen.

Diese Aufgabe wird gelöst durch eine elektrische Heizungsanordnung mit den Merkmalen des Anspruchs 1. Vorteilhafte Ausgestaltungen sind Gegenstand der Unteransprüche.

Erfindungsgemäß ist eine elektrische Heizungsanordnung, insbesondere für ein Kraftfahrzeug, mit mindestens zwei innerhalb eines Gehäuses oder Rahmens angeordneten PTC-Elementen vorgesehen, wobei mindestens ein PTC-Element netz- oder wabenförmig und ferner mindestens ein zweites PTC-Element platten-, streifen- oder quaderförmig ausgebildet ist, wobei die PTC-Waben in zumindest einem Randbereich des Rahmens angeordnet sind und das mindestens eine zweite, platten-, streifen- oder quaderförmige PTC-Element in einem zentralen Bereich innerhalb des Rahmens angeordnet ist.

Die Kombination unterschiedlicher Geometrien der PTC-Elemente, die bevorzugt einhergeht mit unterschiedlichen PTC-Materialien, ermöglicht, dass auch der Randbereich des Luftstroms gezielt gleichmäßig erwärmt werden kann, was bei Heizungsanordnungen mit platten-, streifen- oder quaderförmigen PTC-Elementen zwischen denen zur Vergrößerung der Wärmeübertragungsfläche Wellrippen angeordnet sind, wie beispielsweise in der EP 1 522 439 A1 offenbart, problematisch war.

Die Verwendung unterschiedlicher Geometrien (und ggf. auch Materialien) der PTC-Elemente vereinfacht zudem die Realisierung einer Temperaturschichtung, wobei in der Regel der Luftstrom zum Fußraum wärmer als der Luftstrom zum Kopf ist. Insbesondere bei relativ leistungsschwachen Heizungsanordnungen kann es jedoch erwünscht sein, einen warmen Teilluftstrom (oder ggf. auch den gesamten warmen Luftstrom) zu den Defrost-Düsen zu leiten, um die Windschutzscheibe möglichst schnell von einem Beschlag zu befreien. Dies lässt sich durch eine differenzierte Ausbildung des von Luft durchströmten Querschnitts der Heizungsanordnung und insbesondere der in den entsprechenden Bereichen angeordneten PTC-Elemente und ggf. vorhandener die Wärmeübertragungsfläche vergrößernder Elemente, wie Wellrippen, realisieren.

Vorzugsweise handelt es sich beim ersten, netz- oder wabenförmig ausgebildeten PTC-Element um ein KunststofF-PTC-Element, wobei natürlich auch mehrere derartige Elemente vorgesehen sein können. Die elektrische Kontaktierung kann über Metallstreifen o.ä. erfolgen, die beispielsweise in den Rahmen eingegossen oder an demselben angebracht sind. Um eine gleichmäßige Stromversorgung über die gesamte Fläche des PTC-Elements zu ermöglichen, können weitere Maßnahmen, wie beispielsweise das Vorsehen elektrisch sehr gut leitender Beschichtungen, vorgesehen sein.

Beim zweiten, platten-, streifen- oder quaderförmig ausgebildeten PTC-Element handelt es sich vorzugsweise um ein Keramik-PTC-Element. Diese lassen sich besonders einfach in derartigen blockartigen Formen herstellen. Eine weitere Bearbeitung im Rahmen der Herstellung der Heizungsanordnung ist nicht erforderlich. Die PTC-Elemente können einfach zwischen zwei Kontaktbleche eingeklebt oder auf andere Weise mit denselben verbunden werden. Die elektrische Kontaktierung kann jedoch auch direkt über entsprechend ausgebildete Wellrippen erfolgen. Selbstverständlich kann sich aber auch in diesem Zusammenhang ein Kunststoff-PTC-Material, das - ähnlich einem Keramik-PTC-Element - zwischen zwei Kontaktblechen angeordnet ist, als sinnvoll erweisen.

Im Gegensatz zu bekannten Anordnungen werden somit unterschiedlich ausgebildete PTC-Elemente, bevorzugt auch aus unterschiedlichen Materialien, insbesondere bevorzugt aus Kunststoff-PTC-Material und Keramik-PTC-Material, bestehend, miteinander kombiniert.

Die PTC-Waben sind bevorzugt in zumindest einem Randbereich des Rahmens angeordnet, wobei sie dafür sorgen, dass auch die den Randbereich durchströmende Luft gleichmäßig erwärmt wird. Die PTC-Waben sind insbesondere für den Defrostbetrieb und für den Fall einer Temperaturschichtung wesentlich.

Bevorzugt werden die PTC-Waben dadurch hergestellt, dass ein netz- oder wabenförmiges Grundgerüst, das durch den entsprechenden Bereich des Rahmens gebildet ist, von Kunststoff-PTC-Material umgeben, insbesondere umspritzt, ist.

Mindestens ein zweites, platten-, streifen- oder quaderförmiges PTC-Element ist bevorzugt in einem zentralen Bereich innerhalb des Rahmens angeordnet.

Zur Vergrößerung der Wärmeübertragungsfläche ist vorzugsweise benachbart des zweiten PTC-Elements oder eines das PTC-Element kontaktierenden Kontaktblechs, welches der Stromzu- oder -ableitung dient, mindestens eine Wellrippe angeordnet, die von zu erwärmender Luft umströmbar ist. Dabei können auch mehrere blockartige, zweite PTC-Elemente in einer Reihe zwischen Kontaktblechen und/oder Wellrippen angeordnet sein.

Der Rahmen ist bevorzugt rechteckförmig, insbesondere bevorzugt mit zwei längeren und zwei kürzeren Seiten ausgebildet, wobei die ersten und zweiten PTC-Elemente spiegelbildlich zur Mittellängsachse des Rahmens, insbesondere parallel zu den längeren Seiten des Rahmens, angeordnet sind. Insbesondere bevorzugt ist das oder sind die zweiten PTC-Elemente näher an der Mittellängsachse des Rahmens angeordnet als das oder die ersten PTC-Elemente. Dies ermöglicht eine gleichmäßige Erwärmung der Luft auch in den Randbereichen, in denen das oder die netz- oder wabenförmigen PTC-Elemente angeordnet sind, so dass eine gute Temperaturschichtung und ferner auch ein schnelles Abtauen der Windschutzscheibe möglich sind.

Der Rahmen besteht vorzugsweise aus Polyamid, insbesondere bevorzugt aus PA66, und ist spritzgegossen. Dabei wird bevorzugt im Rahmen der Herstellung des Rahmens auch der später den Kern des ersten, netz- oder wabenförmigen Bereich bildende Bereich gegossen, der in einem späteren Arbeitsschritt mit einem Kunststoff-PTC-Material umspritzt wird. Alternativ kann der entsprechende PTC-Bereich ggf. auch ohne Kern in einem zweiten Arbeitsschritt angespitzt werden. Eine Herstellung mittels Zweikomponenten-Spritzgießens, d.h. in einem einzigen Arbeitsgang, ist ebenfalls möglich.

Erfindungsgemäße Heizungsanordnungen können sowohl als Zuheizer in Verbindung mit einer herkömmlichen Klimaanlage oder einem herkömmlichen Heizer als auch in Alleinstellung vorgesehen sein.

Im Folgenden wird die Erfindung anhand zweier Ausführungsbeispiele unter Bezugnahme auf die Zeichnung im Einzelnen erläutert. In der Zeichnung zeigen:
- Fig.1: eine perspektivische Darstellung einer erfindungsgemäßen Heizungsanordnung gemäß dem ersten Ausführungsbeispiel, und
- Fig. 2: einen Ausschnitt einer vergrößerten, perspektivischen Darstellung einer Heizungsanordnung gemäß dem zweiten Ausführungsbeispiel.

Eine Heizungsanordnung 1 gemäß dem ersten Ausführungsbeispiel dient als Zuheizer in einer Kraftfahr-ceug-Klimaanlage, wobei sie in Luftströmungsrichtung gesehen nach einem herkömmlichen Heizer angeordnet ist. Die Heizungsanordnung 1 weist einen Rahmen 2 aus Kunststoff auf, vorliegend aus PA66, der spritzgegossen ist.

Der Rahmen 2 ist vorliegend im Wesentlichen spiegelbildlich bezüglich der Mittellängsachse ausgebildet, wobei in einem in ein Kraftfahrzeug eingebauten Zustand oben und unten, parallel zur Mittellängsachse des Rahmens 2 verlaufend, wabenförmig ausgebildete Bereiche 3, im Folgenden auch als PTC-Waben bezeichnet, vorgesehen sind, die durch ein Gitter aus besagtem Kunststoff gebildet sind, das von Kunststoff-PTC-Material umspritzt ist, so dass auch diese Randbereiche von Luft durchströmbar sind und die Luft bei ausreichender Stromversorgung die im PTC-Material, das die Waben umgibt, erzeugte Wärme aufnimmt, also erwärmt wird. Auf Grund ihrer Funktion werden die beiden wabenförmig ausgebildeten Bereiche 3 auch als erste PTC-Elemente 4 bezeichnet.

Die Waben sind vorliegend durch ein Gitter mit quadratischen Öffnungen gebildet, wobei die Gitterstege in einem Winkel von 45° zur Mittellängsachse des Rahmens 2 angeordnet sind. Zur Versteifung sind senkrecht zur Mittellängsachse verlaufende Rippen 5 vorgesehen, welche den Randbereich, d.h. die PTC-Elemente 4, in einem Mehrzahl etwa quadratischer Bereiche unterteilt.

Beliebige andere Ausgestaltungen der Waben, wie beispielsweise in der Form von Bienenwaben oder rechteckförmigen Wabenöffnungen, sind ebenfalls möglich. Ebenso können die versteifenden Rippen durch entsprechend verstärkte Gitterstege gebildet sein, in anderen Richtungen verlaufend angeordnet sein oder - bei ausreichender Stabilität des Randbereichs - ganz entfallen. Ferner sind Variationen der Öffnungsgrößen der Waben und/oder Stegbreiten und/oder Öffnungsform der Waben möglich, beispielsweise in Abhängigkeit vom Abstand zur Mittellängsachse.

Im zentralen Bereich sind vorliegend vier Reihen mit jeweils einer Mehrzahl von Keramik-PTC-Elementen 10 vorgesehen, die jeweils zwischen zwei Kontaktblechen 11 angeordnet, vorliegend eingeklebt, sind. Außenseitig der Kontaktbleche 11 sind zur Vergrößerung der Wärmeübertragungsfläche Wellrippen (nicht dargestellt) angebracht, welche die von den PTC-Elementen erzeugte Wärme abführen und durch welche die zu erwärmende Luft strömt. Bezüglich des Aufbaus des zentralen Bereichs wird ausdrücklich auf die EP 1 522 439 A1 verwiesen, deren gesamter Offenbarungsgehalt ausdrücklich mit einbezogen wird. Die Keramik-PTC-Elemente 10 können auf Stoss oder auch beabstandet voneinander zwischen den Kontaktblechen 11 liegen.

Andere Anordnungen sind jedoch auch möglich, so können bspw. auf einer Seite mehrere aufeinanderfolgende, parallel zueinander angeordnete Wellrippen, ggf. unter Zwischenlage eines Kontaktblechs, einer Reihe von PTC-Elementen zugeordnet sein. Die Wellrippen können neben der Funktion der Vergrößerung der Wärmeübertragungsfläche auch die Funktion der Stromversorgung, d.h. die Funktion der Kontaktbleche, erfüllen, so dass - bei entsprechender Ausgestaltung der Wellrippen zur elektrischen Kontaktierung - dieselben vollständig entfallen können.

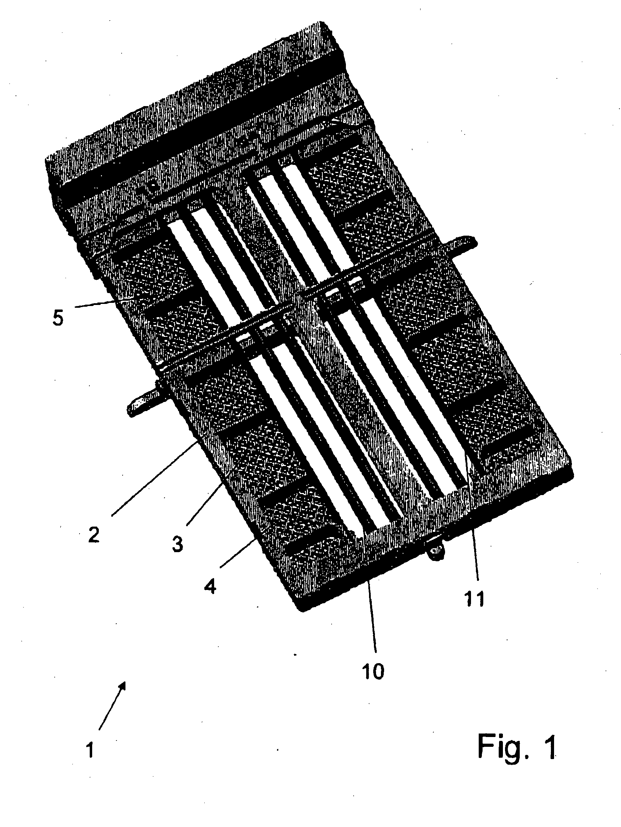

Für die elektrische Kontaktierung sind im Rahmen 2 elektrische Kontakte (nicht näher dargestellt) auf der Außenseite der ersten PTC-Elemente 4 vorgesehen, die vorliegend jeweils mit dem Minus-Pol verbunden sind. Ferner dienen gemäß dem in Fig. 1 dargestellten Ausführungsbeispiel jeweils die äußersten Kontaktbleche 11 der zweiten PTC-Elemente 10, die direkt angrenzend an die ersten PTC-Elemente 4 angeordnet sind, sowohl als elektrischer Kontakt für ersten PTC-Elemente 4 als auch die zweiten PTC-Elemente 10, wobei diese äußersten Kontaktbleche 11 vorliegend jeweils mit dem Plus-Pol verbunden sind. Die weitere elektrische Kontaktierung der zweiten PTC-Elemente 10 erfolgt über die anderen Kontaktbleche 11 auf an sich bekannte Weise, wobei mittig durch den als Strebe ausgebildeten Bereich des Rahmens 2 eine Unterbrechung des Heizbereichs vorgesehen ist, so dass eine unabhängige Regelung der beiden Seiten der Heizungsanordnung 1 möglich ist. Ferner sind hierbei jeweils ein erstes PTC-Element 4 und mindestens ein zweites PTC-Element 10 elektrisch leitend miteinander verbunden.

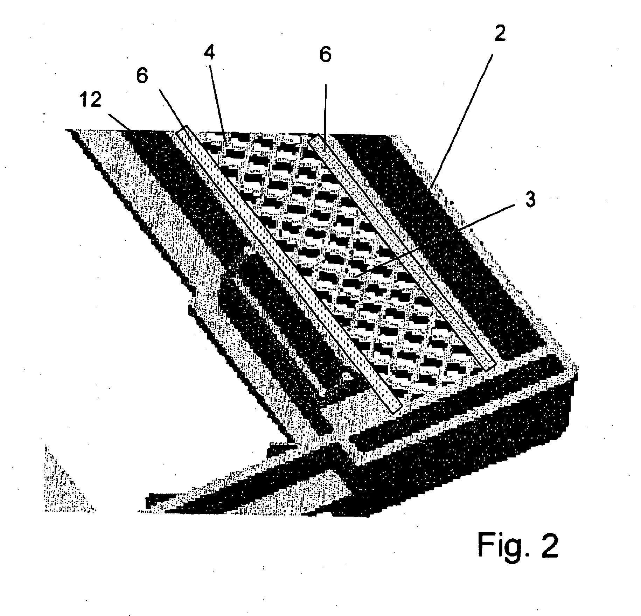

Die elektrische Kontaktierung der ersten PTC-Elemente 4 erfolgt gemäß dem in Fig. 2 dargestellten, zweiten Ausführungsbeispiel, das - soweit nachfolgend nicht ausdrücklich erwähnt - entsprechend dem ersten Ausführungsbeispiel ausgebildet ist, mittels elektrischer Kontakte 6, wobei der Kontakt 6 auf der Außenseite mit dem Minus-Pol und der Kontakt 6 auf der den zweiten PTC-Elementen (nicht in Fig. 2 dargestellt) benachbarten Seite mit dem Plus-Pol verbunden ist. Zwischen den ersten und zweiten PTC-Elementen ist durch das Rahmenmaterial eine Isolierung 12 vorgesehen, so dass eine unabhängige Regelung möglich ist. Die elektrische Kontaktierung der zweiten PTC-Elemente erfolgt über die Kontaktbleche auf an sich bekannte Weise, wobei mittig durch den als Strebe ausgebildeten Bereich des Rahmens eine Unterbrechung des Heizbereichs vorgesehen ist, der jedoch vorliegend nicht mit einer unterschiedlichen Temperaturregelung verbunden ist, was prinzipiell auch möglich wäre, um die Temperaturschichtung zu unterstützen.

Für eine einfache Regelung ist auch eine elektrische Kontaktierung ausschließlich auf den einander gegenüberliegenden Außenseiten der beiden (oder mehr) ersten PTC-Elemente möglich, d.h. der Stromfluss erfolgt quer durch die gesamte Heizungsanordnung. Die mittlere, isolierende Strebe des Rahmens ist in diesem Fall zu überbrücken oder entfällt ganz.

## Patentansprüche

1. Elektrische Heizungsanordnung (1), insbesondere für ein Kraftfahrzeug, mit mindestens zwei innerhalb eines Gehäuses oder Rahmens (2) angeordneten PTC-Elementen (4, 10), wobei mindestens ein PTC-Element (4) netz- oder wabenförmig ausgebildet ist und mindestens ein zweites PTC-Element (10) platten-, streifen- oder quaderförmig ausgebildet ist, wobei die PTC-Waben in zumindest einem Randbereich des Rahmens (2) angeordnet sind und das mindestens eine zweite, platten-streifen- oder quaderförmige PTC-Element (10) in einem zentralen Bereich innerhalb des Rahmens (2) angeordnet ist.

2. Heizungsanordnung nach Anspruch 1, **dadurch gekennzeichnet, dass** das erste, netz- oder wabenförmig ausgebildete PTC-Element (4) ein Kunststoff-PTC-Element ist.

3. Heizungsanordnung nach Anspruch 1 oder 2, **dadurch gekennzeichnet, dass** das zweite, platten-, streifen- oder quaderförmig ausgebildete PTC-Element ein Keramik-PTC-Element (10) ist.

4. Heizungsanordnung nach einem der vorhergehenden Ansprüche, **dadurch gekennzeichnet, dass** der Rahmen (2) im Randbereich von Kunststoff-PTC-Material umgeben, insbesondere umspritzt, ist und PTC-Waben bildet.

5. Heizungsanordnung nach einem der vorhergehenden Ansprüche, **dadurch gekennzeichnet, dass** benachbart des zweiten, platten-, streifen- oder quaderförmigen PTC-Elements (10) oder eines das zweite PTC-Element (10) kontaktierenden Kontaktblechs mindestens eine Wellrippe angeordnet ist, die von zu erwärmender Luft umströmbar ist.

6. Heizungsanordnung nach einem der vorhergehenden Ansprüche, **dadurch gekennzeichnet, dass** mehrere zweite, platten-, streifen- oder quaderförmige PTC-Elemente (10) in einer Reihe zwischen Kontaktblechen und/oder Wellrippen angeordnet sind.

7. Heizungsanordnung nach einem der vorhergehenden Ansprüche, **dadurch gekennzeichnet, dass** der Rahmen (2) rechteckförmig mit zwei längeren und zwei kürzeren Seiten ausgebildet ist, wobei die ersten und zweiten PTC-Elemente (4 und 10) spiegelbildlich zur Mittellängsachse des Rahmens (2), insbesondere parallel zu den längeren Seiten des Rahmens (2), angeordnet sind.

8. Heizungsanordnung nach Anspruch 7, **dadurch gekennzeichnet, dass** das oder die zweiten, platten-, streifen- oder quaderförmigen PTC-Elemente (10) näher an der Mittellängsachse des Rahmens (2) angeordnet sind als das oder die ersten netz- oder wabenförmigen PTC-Elemente (4).

9. Heizungsanordnung nach einem der vorhergehenden Ansprüche, **dadurch gekennzeichnet, dass** mindestens ein erstes PTC-Element (4) und ein zweites PTC-Element elektrisch leitend miteinander verbunden sind.

10. Heizungsanordnung nach einem der vorhergehenden Ansprüche, **dadurch gekennzeichnet, dass** der Rahmen (2) aus Polyamid, insbesondere aus PA66, spritzgegossen ist.

## Claims

1. An electric heating arrangement (1), in particular for a motor vehicle, comprising at least two PTC elements (4, 10) arranged within a housing or a frame (2), wherein at least one PTC element (4) is formed in a grid-shaped or honeycomb-shaped manner, and at least one second PTC element (10) is formed in a plate-shaped, strip-shaped or cuboidal manner, wherein the PTC honeycombs are arranged in at least one edge region of the frame (2), and the at least one second plate-shaped, strip-shaped or cuboidal PTC element (10) is arranged in a central region within the frame (2).

2. The heating arrangement according to claim 1, **characterized in that** the first grid-shaped or honeycomb-shaped PTC element (4) is a PTC element made of plastic.

3. The heating arrangement according to claim 1 or claim 2, **characterized in that** the second plate-shaped, strip-shaped or cuboidal PTC element is a PTC element (10) made of ceramics.

4. The heating arrangement according to any one of the preceding claims, **characterized in that** the frame (2) is surrounded, in particular overmolded, in the edge region with plastic PTC material and forms PTC honeycombs.

5. The heating arrangement according to any one of the preceding claims, **characterized in that** adjacent to the second plate-shaped, strip-shaped or cuboidal PTC element (10) or to a contact plate contacting the second PTC element (10), at least one corrugated rib is arranged around which air to be heated can flow.

6. The heating arrangement according to any one of preceding claims, **characterized in that** a plurality of second plate-shaped, strip-shaped or cuboidal PTC elements (10) are arranged in a row between contact plates and/or corrugated ribs.

7. The heating arrangement according to any one of the preceding claims, **characterized in that** the frame (2) is rectangularly shaped and has two longer and two shorter sides, wherein the first and the second PTC elements (4 and 10) are arranged mirror-imaged to the longitudinal center axis of the frame (2), in particular parallel to the longer sides of the frame (2).

8. The heating arrangement according to claim 7, **characterized in that** the second plate-shaped, strip-shaped or cuboidal PTC element or elements (10) is/are arranged closer to the longitudinal center axis of the frame (2) than the first grid-shaped or honeycomb-shaped PTC element or elements (4).

9. The heating arrangement according to any one of the preceding claims, **characterized in that** at least one first PTC element (4) and a second PTC element are connected to one another in an electrically conductive manner.

10. The heating arrangement according to any one of the preceding claims, **characterized in that** the frame (2) is injection molded from polyamide, in particular from PA66.

## Revendications

1. Agencement de chauffage électrique (1), en particulier pour un véhicule automobile, comprenant au moins deux éléments (4, 10) à coefficient de température positif (CTP) disposés à l'intérieur d'un carter ou d'un cadre (2), où au moins un élément CTP (4) est configuré en étant de forme réticulaire ou en forme de nids d'abeilles, et au moins un deuxième élément CTP (10) est configuré en forme de plaque, de bande ou de parallélépipède, où les nids d'abeilles CTP sont disposés dans au moins une zone de bordure du cadre (2), et le deuxième élément CTP (10) au moins au nombre de un, en forme de plaque, de bande ou de parallélépipède, est disposé dans une zone centrale située à l'intérieur du cadre (2).

2. Agencement de chauffage selon la revendication 1, **caractérisé en ce que** le premier élément CTP (4) configuré en étant de forme réticulaire ou en forme de nids d'abeilles est un élément CTP en matière plastique.

3. Agencement de chauffage selon la revendication 1 ou 2, **caractérisé en ce que** le deuxième élément CTP configuré en forme de plaque, de bande ou de parallélépipède est un élément CTP (10) en céramique.

4. Agencement de chauffage selon l'une quelconque des revendications précédentes, **caractérisé en ce que** le cadre (2) est entouré, en particulier encastré par injection, dans la zone de bordure, par un matériau CTP en matière plastique, et forme des nids d'abeilles CTP.

5. Agencement de chauffage selon l'une quelconque des revendications précédentes, **caractérisé en ce qu'**au moins une ailette ondulée est disposée à proximité du deuxième élément CTP (10) en forme de plaque, de bande ou de parallélépipède, ou bien à proximité d'une tôle de contact venant au contact du deuxième élément CTP (10), laquelle ailette ondulée peut être baignée par de l'air à chauffer.

6. Agencement de chauffage selon l'une quelconque des revendications précédentes, **caractérisé en ce que** plusieurs deuxièmes éléments CTP (10) en forme de plaque, de bande ou de parallélépipède sont disposés sur une rangée formée entre des tôles de contact et/ou des ailettes ondulées.

7. Agencement de chauffage selon l'une quelconque des revendications précédentes, **caractérisé en ce que** le cadre (2) est configuré en étant de forme rectangulaire comportant deux côtés plus longs et deux côtés plus courts, où les premiers et les deuxièmes éléments CTP (4 et 10) sont disposés symétriquement, en miroir, par rapport à l'axe longitudinal médian du cadre (2), en particulier parallèlement aux côtés plus longs du cadre (2).

8. Agencement de chauffage selon la revendication 7, **caractérisé en ce que** le ou les deuxième(s) élément(s) CTP (10), en forme de plaque, de bande ou de parallélépipède, est ou sont disposé(s) plus près de l'axe longitudinal médian du cadre (2) que le ou les premier(s) élément(s) CTP (4) de forme réticulaire ou en forme de nids d'abeilles.

9. Agencement de chauffage selon l'une quelconque des revendications précédentes, **caractérisé en ce qu'**au moins un premier élément CTP (4) et un deuxième élément CTP sont connectés l'un à l'autre en étant électroconducteurs.

10. Agencement de chauffage selon l'une quelconque des revendications précédentes, **caractérisé en ce que** le cadre (2) en polyamide, en particulier en PA66, est moulé par injection.
